# EUROPEAN PATENT APPLICATION

(11) **EP 3 799 991 A1**
(43) Date of publication of application: **07.04.2021**
(21) Application number: 20198403.6
(22) Date of filing: 25.09.2020
(51) Int. Cl.: B23K 9/10, B23K 9/173, B23K 9/29, B23K 35/02

(54) **A SYSTEM AND A METHOD ACHIEVING ULTRA HIGH DEPOSITION RATE WELDING**

(30) Priority: 04.10.2019 US 201916593648
(71) Applicant: Lincoln Global, Inc., Santa Fe Springs, CA 90670 (US)
(72) Inventor: SCHAEFFER, John Benjamin, Rocky River, OH Ohio 44116 (US); LIAO, Yen-Chih, Richmond Heights, OH Ohio 44143 (US); JOHNS, Kent R., Hudson, OH Ohio 44236 (US); PETERS, Steven R., Huntsburg, OH Ohio 44046 (US)
(74) Representative: Grosse Schumacher Knauer von Hirschhausen

(57) **Abstract**

The present disclosure describes a system and a method directed at an improved system (100) capable of achieving ultra-high deposition rates. In particular, the system (100) and the method are described for implementing a welding system (100) that includes a GMAW welding system (104) and a hot wire welding system (150, 107) in order to achieve ultra-high deposition rates. The welding system (100) includes a consumable cored welding wire (102) that serves as an electrode. The consumable cored welding wire (102) includes one or more alkaline earth metal elements at a concentration between 0.005% and 10% on the bases of total weight of the consumable cored welding wire (102). The hot wire welding system (150, 107) includes a consumable hot wire (106) configured to be positioned into a molten weld pool (197) created by the melted consumable cored welding wire (102).

## Description

### FIELD OF THE INVENTION AND TECHNICAL BACKGROUND

The invention is related to a welding system according to claim 1 and to a method of welding according to claim 8. Welding systems and surface engineering systems are prevalent amongst many industrial environments. As such, there is a continuous demand from the users for improved welds. Improved welds require higher deposition rates and improved physical properties while also maintaining a high quality appearance. For example, improved physical properties may include high yield strength, ductility, and fracture toughness. Similarly, higher deposition rates allow for more welding material to enter into a workpiece or improved speed of a welding system. Thus, there is a need for an improved system capable of these desirable traits.

### DESCRIPTION

In order to improve welding, especially with respect to speed, deposition rate and/or quality, a welding system according to claim 1 is described and a welding method according to claim 8. Preferred embodiments are subject of the subclaims. Various embodiments disclosed herein are related to a system. In some embodiments, the system includes a gas metal arc welding (GMAW) subsystem combined with a hot wire welding subsystem. The system includes a consumable cored welding wire comprising one or more alkaline earth metal elements at a concentration between 0.005% and 10% of the total weight of the welding wire, where the one or more alkaline earth metal elements are alloyed with a base metal composition. The system also includes a first power source configured to apply a current to generate a welding arc sufficient to melt the consumable cored welding wire. The system also includes a first weld gun configured to deposit the melted consumable cored welding wire onto a workpiece, a consumable hot wire configured to melt without being directly subjected to the welding arc, a hot wire torch configured to guide the consumable hot wire to a weld pool on the work piece, and a controller configured to control the first power source, feed rate of the consumable cored welding wire, and feed rate of the consumable hot wire such that the system achieves a deposition rate exceeding 50 pounds per hour.

In general, the system is designed to provide a consumable cored welding wire configured to serve as an electrode, the welding wire comprising one or more alkaline earth metal elements at a concentration between 0.005% and 10% of the total weight of the welding wire to a close proximity of a workpiece. The system is further designed to supply a current to the first weld gun such that a welding arc sufficient to melt the consumable cored welding wire is formed, and to deposit the melted consumable cored welding wire onto a workpiece. The system is further designed to deposit a consumable hot wire onto the workpiece such that a deposition rate of the consumable hot wire and the consumable cored welding wire collectively exceeds 50 pounds per hour. In some embodiments, the consumable hot wire is guided by a hot wire torch to the molten weld pool and also to close proximity to the welding arc. In some embodiments, depositing the consumable hot wire further comprises heating the consumable hot wire by applying a first current from a hot wire power supply to the consumable hot wire such that the first current travels to the weld pool on the workpiece. In some embodiments, the controller monitors the first current and turns off the first current in response to detecting an arc event between the consumable hot wire and the weld pool.

### BRIEF DESCRIPTION OF THE DRAWINGS

The foregoing and other features of the present disclosure will become more fully apparent from the following description and appended claims, taken in conjunction with the accompanying drawings. Understanding that these drawings depict only several embodiments in accordance with the disclosure and are, therefore, not to be considered limiting of its scope, the disclosure will be described with additional specificity and detail through use of the accompanying drawings.
Figure 1 is a schematic drawing of a system in accordance with an illustrative embodiment.
Figure 2 is an isometric view of a configuration of one or more electrode wires in a system in accordance with an illustrative embodiment.
Figure 3 is an isometric view of a consumable cored welding wire that has one or more elements in accordance with an illustrative embodiment.
Figure 4 is a flow diagram depicting a method of a welding process in accordance with an illustrative embodiment.

In the following detailed description, reference is made to the accompanying drawings, which form a part hereof. In the drawings, similar symbols typically identify similar components, unless context dictates otherwise. The illustrative embodiments described in the detailed description, drawings, and claims are not meant to be limiting. Other embodiments may be utilized, and other changes may be made, without departing from the spirit or scope of the subject matter presented here. It will be readily understood that the aspects of the present disclosure, as generally described herein, and illustrated in the figures, can be arranged, substituted, combined, and designed in a wide variety of different configurations, all of which are explicitly contemplated and make part of this disclosure.

### DETAILED DESCRIPTION

The present disclosure describes devices and methods directed to an improved welding system capable of achieving ultra-high deposition rates. In particular, devices and methods are described for implementing a welding system that includes a GMAW welding system and a hot wire welding system in order to achieve ultra-high deposition rates. The GMAW welding system includes a consumable cored welding wire (e.g., electrode) that includes one or more alkaline earth metal elements at a concentration between 0.005% and 10% on the bases of total weight of the consumable cored welding wire. The hot wire welding system includes a consumable hot wire (e.g., electrode). In general, the GMAW welding system operates such that a current generated by a power source creates a welding arc and melts the consumable cored welding wire and deposits resulting molten droplets onto the workpiece. The consumable hot wire is placed in closed proximity to, but not directly in contact with, the welding arc such that the indirect heat melts the consumable hot wire and the resulting molten droplets of the consumable hot wire are also deposited onto the workpiece. The resulting total deposition rate of the consumable cored welding wire and the consumable hot wire is in excess of 50 pounds per hour. In some embodiments, the total deposition rate is in excess of 75 pounds per hour. This ultra-high deposition rate is achievable, in part, due to the increased current (and resulting heat) tolerated by the consumable cored welding wire and resulting increased indirect heat that can be applied to the consumable hot wire and cause an increased melting rate. A single solid wire GMAW has an upper range of about 25 pounds per hour deposition rate. The consumable cored welding wire when used in a GMAW system without the welding wire can only achieve a deposition rate of up to 50 pounds per hour before undesirable welding traits occur. Examples, of undesirable welding traits of a GMAW system include excessive penetration, excessive spatter, undercut and porosity. The combination of the consumable cored welding wire and the hot wire welding technique allow for a deposition rate of 50 pounds per hour to be exceeded while still maintaining quality in the weld.

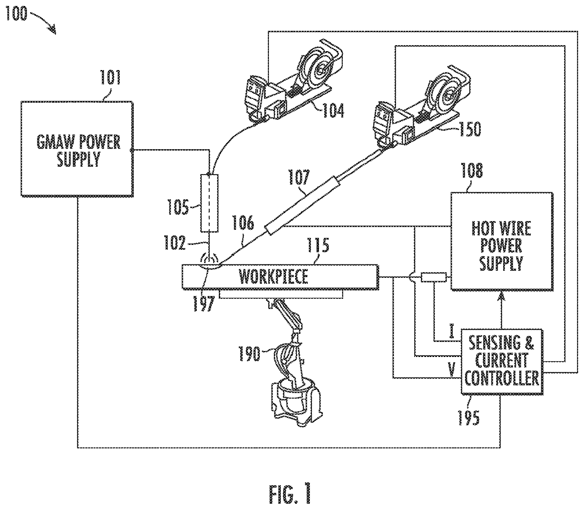

Figure 1 is a schematic drawing of a system 100 in accordance with an illustrative embodiment. In some embodiments, the system 100 is a welding system. In some embodiments, the system 100 is a surface engineering system. For example, such surface engineering systems may include systems for additive, cladding, build up, and/or hard-facing applications. The welding system 100 includes a GMAW system and a hot wire welding system. The GMAW system includes a power supply 101, a consumable cored welding wire 102, a wire feeder 104, and a torch 105. In general, the consumable cored welding wire 102 is delivered to a weld pool 197 on a workpiece 115 via the wire feeder 104 and the torch 105. The power supply 101 generates a current and transmits the current to the torch 105. The current then travels to the end of the consumable cored welding wire 102 and creates a welding arc between the consumable cored welding wire and a workpiece. In some embodiments, the power supply 101 is configured to generate a pulsed direct current (DC) power supply. In additional embodiments, the power supply 101 may be configured to generate an alternating current (AC) power supply. It is to be appreciated that although a GMAW system is shown and discussed herein, alternative embodiments may use a GTAW, FCAW, MCAW etc. The GMAW system may also include a shielding gas system or sub arc flux system which is not depicted.

The consumable cored welding wire 102 may include a core surrounded by a sheath. The core may include particles having a base metal alloyed with one or more alkaline earth metal elements at a concentration between 0.005% and 10% on the basis of a total weight of the consumable cored welding wire 102. Examples, of such consumable cored welding wires 102 are described throughout US Patent Application Publication No. 2018/0133844, the contents of which are hereby incorporated by reference. The consumable cored welding wire 102 allows for use of a current having a higher amperage (e.g., and thereby power) during a weld job while maintaining stability and increasing deposition rates.

The hot wire welding system includes a consumable hot wire 106, a hot wire torch 107, a hot wire power supply 108, and a hot wire feeder 150. In general, the hot wire 106 is delivered to the weld pool on the workpiece 115 via the hot wire feeder 150 and the hot wire torch 107. In some embodiments, the hot wire torch 107 is resistance-heated by electrical current from the hot wire power supply 108 which heats and melts the hot wire to be deposited into the weld pool 197 on the workpiece 115. In some embodiments, the hot wire power supply 108 delivers a pulsed direct current (DC) power supply. In additional embodiments, the hot wire power supply 108 delivers an alternating current (AC) power supply to the hot wire torch 107. In some embodiments, the consumable hot wire 106 may be guided to within a close proximity of a welding arc generated by the GMAW system such that the consumable hot wire 106 melts and deposits molten droplets onto the workpiece 115 (e.g., at the weld pool 197). In some embodiments, the hot wire power supply 108 may be omitted and the indirect heat from the welding arc may be sufficient to melt the consumable cored hot wire 106. In some embodiments, the hot wire welding system may include one or more consumable hot wires configured to be melted (deposited) onto the workpiece 115 using one or more hot wire torches.

The welding system 100 may also include a motion control system capable of moving the work piece relative to the hot wire torch 107 and the torch 105. In some embodiments, the motion control system may include a motion controller 180 and a robot 190 configured to move the workpiece 115 during a weld job. In alternative embodiments, the torch 105 and the hot wire torch 107 may be affixed together in a manner that the torch 105 and the hot wire torch 107 may be moved manually or automatically relative to the workpiece 115 and continue to weld in the manner described herein throughout the weld job. That is, in some embodiments, the hot wire torch 107 and the torch 105 may be affixed to the end of a robot arm of the robot 190 that is capable of moving the torches 105 and 107 relative to the workpiece 115.

The welding system 100 may also include a controller 195. The controller 195 may be operatively and communicably connected to the motion controller 180, the power supply 101, and the hot wire supply 108. Thus, as a result of the structure, the controller 195 is capable of measuring a potential difference between the workpiece 115 and respective torches 105 and 107, and also capable of measuring a current through the workpiece 115 and the hot wire 106. The controller 195 may also be capable of calculating a resistance value or a power value from the measured current and voltage and change settings or outputs accordingly.

In general, the controller 195 is configured to control the first power source 101, a feed rate of the consumable cored welding wire 102 (e.g., via controlling the wire feeder 104), and a feed rate of the consumable hot wire 106 (e.g., via controlling the hot wire feeder 150) such that the welding system achieves a deposition rate exceeding 75 pounds per hour. For example, the controller 195 may detect a voltage difference between the hot wire torch 107 and the workpiece 115 to be zero or near zero, which may signal to the controller 195 that the consumable hot wire 106 is in contact with the weld pool 197 (e.g., at the workpiece 115). Alternatively, the controller 195 may sense a voltage (e.g., 2-10V) between the hot wire torch 107 and the workpiece 115, which may signal to the controller 195 that the consumable hot wire 106 is not in contact with the weld pool 197 (e.g., the workpiece 115) and that the hot wire feeder 150 should be sped up in order to keep the consumable hot wire 106 in the weld pool 197.

The controller 195 may also detect an arc event between (e.g., when the voltage spikes) the hot wire torch 107 and the workpiece 115 and adjust the hot wire power supply 108 to suppress the arc. For example, the controller 195 may sense via a current or a voltage change, an arc event between the consumable hot wire 106 and the workpiece 115 and turn off the hot wire power supply 108 in order to suppress the arc and allow the consumable hot wire 106 to re-engage the weld pool 197 on the workpiece 115. In some embodiments, the current that the controller senses is a current that is being transmitted via the consumable hot wire 106 from the hot wire power supply 108 to the workpiece 115 in order to heat the consumable hot wire 106. In another example, the controller 195 communicable coupled to the wire feeder 104 and is configured to control the wire feeder 104 to unwind a spool of the consumable cored welding wire 104 and guide the consumable cored welding wire 102 to the torch 105 (e.g., first weld gun) based on settings of the controller 195. In some embodiments, the controller 195 may actively adjust the speed of the wire feeder 104 to ensure consumable cored welding wire 102 is appropriately positioned a distance away from the workpiece 115 and a proper amount of stick-out from the torch 105.

Furthermore, the controller 195 may track the currents of the hot wire power supply 108 and the power supply 101 and synchronize the currents to ensure a stable welding arc is achieved and that the currents (e.g., and resulting magnetic fields) of the two power supplies 101 and 108 do not interfere with one another. In alternative embodiments, other current synchronization methods, controllers, or hardware may be implemented to achieve stable operation.

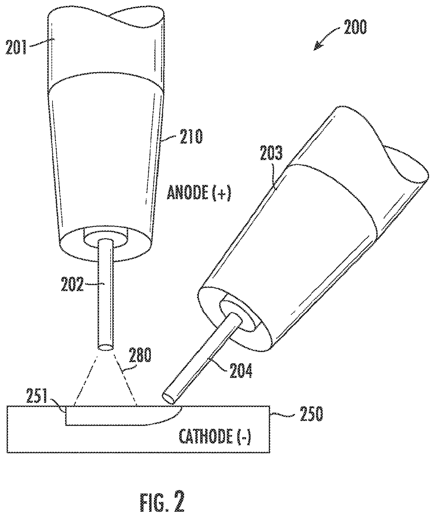

Figure 2 is an isometric view of a configuration of one or more electrodes of a welding system 200 in accordance with an illustrative embodiment. In particular, the welding system 200 includes a first welding torch 201, a consumable cored welding wire 202, a hot wire welding torch 203, and a hot wire consumable electrode 204. The first welding torch 201 may include a nozzle 210 designed to guide the consumable cored welding wire 202 out of the first welding torch 201 toward a workpiece 250. In some embodiments, the first welding torch 201 may be a GMAW welding torch. The first welding torch 201 receives a current from a power supply (not depicted) and a welding arc 280 is generated between the consumable cored welding wire 202 and a workpiece 215. The welding arc 280 melts the consumable cored welding wire 202 and molten droplets are deposited onto the workpiece 250 to create a molten weld pool 251. In some embodiments, the current supplied to generate the welding arc 280 is about 300 amps to 1000 amps. In some embodiments, the current supplied to generate the welding arc 280 is more than 1000 amps.

The hot wire welding torch 203 is designed and positioned to direct the consumable hot wire 204 to the molten weld pool 251. As indicated above, the hot wire welding torch 203 may also include a first terminal (not depicted) that is designed to receive a first current from a hot wire power supply (not depicted) and transmit the first current via the consumable hot wire 204 to the workpiece in order to heat the consumable hot wire 204 to or near a melting temperature. In some embodiments, the consumable hot wire 204 is guided by the hot wire welding torch 203 to the molten weld pool 251 and in close proximity to, but not in contact with, the welding arc 280 such that heat from the welding arc 280 and molten weld pool 251 contribute to the melting of consumable hot wire. In general, the melting of the consumable hot wire 204 results in the molten droplets of the consumable hot wire 204 being deposited into the molten weld pool 251. The exact composition of the consumable hot wire 204 may be selected based on the specific weld job. For example, the consumable hot wire 204 may be a tungsten carbide.

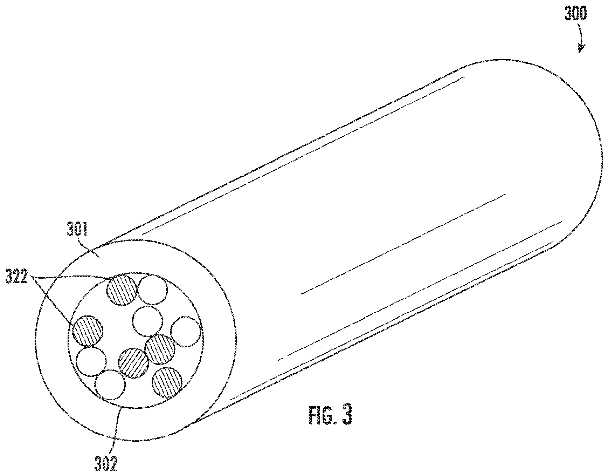

Figure 3 is an isometric view of a cross section of consumable cored welding wire 400 that has one or more elements in accordance with an illustrative embodiment. The consumable cored welding wire 300 includes an outer sheath 301 and an inner core 402. Generally, a cored electrode is a continuously fed tubular metal sheath with a core or particles or powders. In some embodiments, the outer sheath 301 is formed from a mild steel, steel composite, aluminum, aluminum composite, or a combination thereof. In general, the consumable cored welding wire 300 is flexible enough to be wound into a spool. In some embodiments, the consumable cored welding wire 300 has an out diameter 310 between 0.045" (1.1 mm) and 0.068" (1.77 mm), between 0.045" (1.1 mm) and 3/32" (2.4 mm), or between 0.052" (1.4 mm) and 0.068" (1.7 mm).

In some embodiments, the inner core 302 has a base metal with additives or other elements 322 (e.g.., alkaline earth metals) added therein. In some embodiments, the base metal is aluminum or an aluminum composition. In some embodiments, the base metal is steel or a steel composition. In some embodiments, the base metal is the same metal that forms the sheath. The inner core 302 includes one or more alkaline earth metal elements (Be, Mg, Cam Sr, Ba, Ra) at a concentration between 0.005% and 10% of the total weight of the consumable cored welding wire 300. That is, the atoms of the one or more alkaline earth metal elements are alloyed with the base metal composition within the above referenced range to form the inner core 302. In some embodiments, elements of fluorine may also be added to the inner core composition such that the fluorine is between about 0.1 % and above 1.5% of the total weight of the electrode consumable cored welding wire 400.

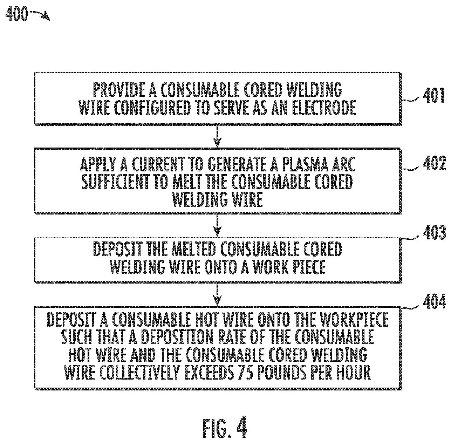

Figure 4 is a flow diagram depicting a method of welding in accordance with an illustrative embodiment. In an operation 401, a consumable cored welding wire is provided to a workpiece via a first welding torch. The consumable cored welding wire may be fed from a wire feeder through the first welding torch such that an end of the consumable cored welding wire is in close proximity to the workpiece. The consumable cored welding wire includes one or more alkaline earth metal elements (Be, Mg, Cam Sr, Ba, Ra) at a concentration between 0.005% and 10% of the total weight of the consumable cored welding wire. The consumable cored welding wire may be continuously fed via the wire feeder throughout the entire weld job such that a distance between the consumable cored welding wire and the workpiece remains substantially consistent.

In an operation 402, a current is supplied to the welding torch such that a welding arc is generated between the consumable cored welding wire and the workpiece. In some embodiments, a controller receives values as an input to control a power source, the power source may then output the desired current to the first welding torch. In some embodiments, the current is in the range of 300 amps to 500 amps. In some embodiments, the current is a constant current. In some embodiments, the current is an alternating current. The current generates a welding arc between the consumable cored welding wire and the workpiece. In some embodiments, the controller also directs a gas system to supply metal inert gasses to the first welding torch while the current is being applied. The first welding torch may then project the metal inert gas out of a nozzle in order to shield a molten weld pool from the atmospheric gasses.

In an operation 402, melted droplets from the consumable cored welding wire are deposited onto the workpiece. The welding arc causes the end of the consumable cored welding wire to melt and molten droplets to be deposited onto the workpiece. That is, the molten droplets form the molten weld pool on the workpiece. The workpiece may be moved relative the first welding torch while the current is being applied such that a new (e.g., or elongated) molten weld pool is deposited onto the workpiece.

In an operation 403, a consumable hot wire is provided to the workpiece such that a deposition rate of the consumable hot wire and the consumable cored welding wire collectively exceed 50 pounds per hour. In some embodiments, the collective deposition rate of the consumable hot wire and the consumable cored welding wire collectively exceeds 75 pounds per hour. In some embodiments, the hot wire is 0.52" in diameter. The consumable hot wire is provided via a hot wire torch. In particular, a second wire feeder may unwind a spool of the consumable hot wire and feed the hot wire torch such that the consumable hot wire extends through the hot wire torch and extends into or near the molten weld pool and in close proximity to the welding arc. In some embodiments, the hot wire torch may include a resistive heating element that receives a current and heats the consumable hot wire. In some embodiments, a hot wire power supply generates a first current that is transmitted through the consumable hot wire to the workpiece and thereby heats the consumable hot wire. The consumable hot wire melts as a result of the heating (e.g., being in close proximity of the welding arc and molten weld pool and, if applicable, the heating from the hot wire torch) and the resulting molten droplets are deposited into the weld pool. The resulting total deposition rate of the entire welding process exceeds 75 pounds an hour.

With respect to the use of plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.).

It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to inventions containing only one such recitation, even when the same claim includes the introductory phrases "one or more" or "at least one" and indefinite articles such as "a" or "an" (e.g., "a" and/or "an" should typically be interpreted to mean "at least one" or "one or more"); the same holds true for the use of definite articles used to introduce claim recitations. In addition, even if a specific number of an introduced claim recitation is explicitly recited, those skilled in the art will recognize that such recitation should typically be interpreted to mean at least the recited number (e.g., the bare recitation of "two recitations," without other modifiers, typically means at least two recitations, or two or more recitations).

Furthermore, in those instances where a convention analogous to "at least one of A, B, and C, etc." is used, in general such a construction is intended in the sense one having skill in the art would understand the convention (e.g., "a system having at least one of A, B, and C" would include but not be limited to systems that have A alone, B alone, C alone, A and B together, A and C together, B and C together, and/or A, B, and C together, etc.). In those instances where a convention analogous to "at least one of A, B, or C, etc." is used, in general such a construction is intended in the sense one having skill in the art would understand the convention (e.g., "a system having at least one of A, B, or C" would include but not be limited to systems that have A alone, B alone, C alone, A and B together, A and C together, B and C together, and/or A, B, and C together, etc.). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B." Further, unless otherwise noted, the use of the words "approximate," "about," "around," "substantially," etc., mean plus or minus ten percent.

The foregoing description of illustrative embodiments has been presented for purposes of illustration and of description. It is not intended to be exhaustive or limiting with respect to the precise form disclosed, and modifications and variations are possible in light of the above teachings or may be acquired from practice of the disclosed embodiments. It is intended that the scope of the invention be defined by the claims appended hereto and their equivalents.

**REFERENCE NUMBERS**

| | | | |
|---|---|---|---|
| 100 | system | 204 | consumable hot wire |
| 101 | power supply | 210 | nozzle |
| 102 | welding wire | 215 | workpiece |
| 104 | wire feeder | 250 | workpiece |
| 105 | torch | 251 | weld pool |
| 106 | hot wire | 280 | welding arc |
| 107 | hot wire torch | 300 | welding wire |
| 108 | wire power supply | 301 | outer sheath |
| 115 | workpiece | 302 | inner core |
| 150 | hot wire feeder | 322 | element |
| 180 | motion controller | 400 | welding wire |
| 190 | robot | 401 | operation |
| 195 | controller | 402 | inner core |
| 197 | weld pool | 403 | operation |
| 200 | welding system | | |
| 201 | first welding torch | AC | alternating current |
| 202 | cored welding wire | DC | direct current |
| 203 | wire welding torch | | |

## Claims

1. A system (100, 200) comprising:
a consumable cored welding wire (102, 202, 300, 400) comprising one or more alkaline earth metal elements at a concentration between 0.005% and 10% of the total weight of the welding wire (102, 202, 300, 400), wherein the one or more alkaline earth metal elements are alloyed with a base metal composition;
a first power source configured to apply a current to generate a welding arc sufficient to melt the consumable cored welding wire (102, 202, 300, 400);
a first weld gun configured to deposit the melted consumable cored welding wire onto a workpiece (115, 215, 250);
a consumable hot wire (204) configured to melt without being directly subjected to the welding arc;
a hot wire torch (107, 203) configured to guide the consumable hot wire (204) to a weld pool on the workpiece (115, 215, 250); and
a controller (195) configured to control the first power source, feed rate of the consumable cored welding wire (102, 202, 300, 400), and feed rate of the consumable hot wire (204) such that the system (100, 200) achieves a deposition rate exceeding 50 pounds per hour.

2. The system (100, 200) of claim 1, wherein the first power source is configured to supply the current to generate the welding arc to the first weld gun,
wherein, preferably, the current is within the range of 300 amps to 1000 amps.

3. The system (100, 200) of claim 1 or 2, further comprising a wire feeder (104) configured to unwind a spool of the consumable cored welding wire (102, 202, 300, 400) and guide the consumable cored welding wire (102, 202, 300, 400) to the first weld gun.

4. The system (100, 200) of any of the claims 1 to 3, wherein the welding arc is generated between an end of the consumable cored welding wire (102, 202, 300, 400) and the workpiece (115, 215, 250).

5. The system (100, 200) of any of the claims 1 to 4, further comprising a hot wire feeder (150) configured to unwind a spool of the consumable hot wire (204) and guide the consumable hot wire (204) to and through the hot wire torch (107).

6. The system (100, 200) of any of the claims 1 to 5, wherein the hot wire torch (107) is configured to transmit a current from a hot wire power source to the consumable hot wire (204) such that a first current is transmitted to the workpiece (115, 215, 250) via the consumable hot wire (204), and/or
wherein the hot wire torch (107) is mounted relative to the first weld gun such that the hot wire torch (107) guides the consumable hot wire (204) within close proximity of the welding arc (280) and to the weld pool (251).

7. The system (100, 200) of any of the claims 1 to 6, wherein the controller (195) is communicably connected to the workpiece (115, 215, 250), the hot wire torch (107), and the hot wire feeder (150), and/or
wherein the controller (195) is configured speed up the hot wire feeder (150) when a voltage sensed between the hot wire torch (107) and the work piece (115, 215, 250) is between 2 volts and 10 volts.

8. A method comprising:
providing, via a system, a consumable cored welding wire configured to serve as an electrode, the welding wire comprising one or more alkaline earth metal elements at a concentration between 0.005% and 10% of the total weight of the welding wire, wherein the one or more alkaline earth metal elements are alloyed with a base metal composition;
applying, via the system, a current to generate a welding arc sufficient to melt the consumable cored welding wire;
depositing, via a first weld gun of the system, the melted consumable cored welding wire onto a workpiece; and
depositing, via a hot wire torch of the system, a consumable hot wire onto the workpiece such that a deposition rate of the consumable hot wire and the consumable cored welding wire collectively exceeds 50 pounds per hour.

9. The method of claim 8, wherein the current is between 300 amps and 1000 amps, and wherein the consumable hot wire is deposited onto the workpiece as a result of melting from the indirect heat of the welding arc.

10. The method of claim8 or 9, wherein depositing the consumable hot wire comprises:
guiding, by the hot wire torch, the consumable wire to a weld pool on the workpiece and to close proximity of the welding arc; and/or
controlling, by a controller of the system, an unwind speed of a hot wire feeder such that the deposition rate of 50 pounds per hour is achieved, and/or
heating the consumable hot wire by applying a first current from a hot wire power supply to the consumable hot wire such that the first current travels to the weld pool on the workpiece, wherein the controller monitors the first current and turns off the first current in response to detecting an arc event between the consumable hot wire and the weld pool.

11. The method of any of the claims 8 to 10, wherein providing the consumable cored welding wire comprises guiding, by a wire feeder and the first weld gun, one end of the consumable cored welding wire to a distance away from the workpiece.

12. The method of any of the claims 8 to 11, wherein the current is provided from a power source to the first weld gun such that the welding arc forms between an end of the consumable cored welding wire and the workpiece.

13. The method of any of the claims 8 to 12, further comprising moving the hot wire torch and the first weld gun together over the workpiece to complete a weld job.

14. The method of any of the claims 8 to 13, wherein the current is applied as a direct current, or
wherein the current is applied as an alternating current.

15. The method of any of the claims 8 to 14, further comprising monitoring, via a controller of the system, a voltage between the hot wire torch and the workpiece and turning off a hot wire power supply in response to detecting an arc event.
